# DEMANDE DE BREVET EUROPEEN

(11) **EP 1 220 420 A1**
(43) Date de publication de la demande: **03.07.2002**
(21) Numéro de dépôt: 01403306.2
(22) Date de dépôt: 20.12.2001
(51) Int. Cl.: H02K 5/04, H02K 15/14, H02K 1/17, H01F 41/02

(54) **Procédé de fabrication d'un inducteur d'une machine électrique**

(30) Priorité: 28.12.2000 FR 0017151
(71) Demandeur: VALEO EQUIPEMENTS ELECTRIQUES MOTEUR, 94017 Creteil Cedex (FR)
(72) Inventeur: Magnier, Pierre, 69002 Lyon (FR)
(74) Mandataire: Gamonal, Didier

(57) **Abrégé**

L'invention propose un procédé de fabrication d'un inducteur (44) d'une machine électrique tournante qui comporte une carcasse métallique (20) protégée contre la corrosion et au moins un aimant (36) qui est collé sur la face tubulaire intérieure (42) de la carcasse métallique (20), caractérisé en ce qu'il comporte une première étape de collage dudit au moins un aimant (36) sur ladite face intérieure (42), et une deuxième étape de protection au cours de laquelle les zones libres de la carcasse métallique (44) sont revêtues d'au moins une couche de protection contre la corrosion.

## Description

L'invention concerne un procédé de fabrication d'un inducteur d'une machine électrique tournante.

L'invention concerne plus particulièrement un procédé de fabrication d'un inducteur de machine électrique tournante qui comporte une carcasse métallique protégée contre la corrosion.

De façon connue, les inducteurs de machines électriques tournantes comportent une carcasse métallique, généralement en acier doux. La carcasse permet ainsi la conduction du flux magnétique nécessaire au fonctionnement de la machine.

La carcasse de l'inducteur est exposée à un environnement agressif. Elle doit donc être protégée contre la corrosion. Pour ce faire, il est connu de la recouvrir d'une couche de protection contre la corrosion.

Ainsi, de façon connue, la carcasse de l'inducteur est trempée dans un bain d'un matériau de protection contre la corrosion qui la recouvre intégralement.

Ensuite des aimants sont collés sur la face tubulaire intérieure de la carcasse, de façon à produire un champ magnétique qui permet, en combinaison avec un induit mobile, la production d'un couple mécanique ou d'un courant électrique lors du fonctionnement de la machine électrique tournante en mode moteur ou en mode alternateur respectivement.

Lors du fonctionnement de la machine électrique tournante, le courant électrique qui provient des balais ou charbons de pôle négatif doit circuler jusqu'à la borne négative de la batterie en passant notamment par un palier arrière puis par la carcasse de l'inducteur.

Par conséquent, la continuité électrique doit être assurée entre le palier arrière et la carcasse. La couche de protection utilisée contre la corrosion est ainsi avantageusement conductrice de l'électricité.

En effet, une couche de protection contre la corrosion peu, ou pas, conductrice de l'électricité augmente la résistance électrique, ce qui a pour effet de faire chuter de façon importante le rendement de la machine électrique tournante.

Pour garantir un fonctionnement optimal ainsi qu'une durée de vie suffisamment longue de la machine électrique tournante, il est impératif que le collage des aimants sur la face tubulaire intérieure de la carcasse soit très résistant. En effet, lors du fonctionnement de la machine électrique tournante les aimants sont soumis à d'importantes contraintes mécaniques.

Ainsi, l'adhérence de la colle sur les faces extérieures connexes des aimants d'une part, et la face tubulaire intérieure concave de la carcasse d'autre part, doit être suffisamment élevée pour résister aux contraintes mécaniques.

Une adhérence suffisante de la colle sur les faces extérieures des aimants peut être obtenue par un très grand nombre de colles.

Cependant, l'adhérence de la colle sur la face intérieure de la carcasse dépend en grande partie de la nature de la couche de protection contre la corrosion.

La couche de protection doit donc présenter des propriétés anti-corrosion, être bonne conductrice de l'électricité et permette une adhérence suffisante de la colle.

Dans la pratique, il existe plusieurs types de revêtements utilisés comme couche de protection. Les revêtements métalliques, notamment ceux à base de zinc, permettent une bonne conduction de l'électricité et assurent une bonne protection anti-corrosion, mais ils ne permettent qu'une adhérence médiocre des colles, ce qui augmente le risque de décollement des aimants et diminue la fiabilité de la machine électrique tournante.

Il est aussi connu de protéger la carcasse contre la corrosion par une phosphatation. Un tel revêtement permet une bonne adhérence des aimants. En effet, l'état de surface de ce revêtement est poreux, ce qui favorise l'accrochage de la colle. Cependant, la couche de phosphatation augmente la résistance électrique de la carcasse et diminue le rendement de la machine électrique tournante.

Dans le but d'apporter une solution à ces problèmes, l'invention propose un procédé de fabrication d'un inducteur d'une machine électrique tournante qui comporte une carcasse métallique protégée contre la corrosion et au moins un aimant qui est collé sur la face tubulaire intérieure de la carcasse métallique, et qui est dépourvu de protection contre la corrosion au niveau de sa face destinée à être collée sur la face tubulaire de la carcasse métallique, caractérisé en ce qu'il comporte une première étape de collage dudit au moins un aimant sur ladite face intérieure, et une deuxième étape de protection au cours de laquelle les zones libres de la carcasse métallique sont revêtues d'au moins une couche de protection contre la corrosion.

Selon d'autres caractéristiques du procédé selon l'invention :
- l'une des couches de protection contre la corrosion est une couche de passivation organique,
- l'une des couches de protection contre la corrosion est une couche conductrice de l'électricité,
- la couche de protection contre la corrosion est un revêtement métallique,
- le revêtement métallique comporte du zinc,
- le revêtement métallique comporte du nickel,
- la deuxième étape est réalisée par immersion de la carcasse métallique, sur laquelle est collé ledit au moins un aimant, dans un bain d'une substance protectrice contre la corrosion,
- au cours de la deuxième étape les faces annulaires transversales de la carcasse sont protégées contre le revêtement de la couche de protection contre la corrosion,
- le procédé comporte une troisième étape au cours de laquelle la couche de protection est enlevée des faces annulaires transversales de la carcasse.

D'autres caractéristiques et avantages de l'invention apparaîtront à la lecture de la description détaillée qui suit pour la compréhension de laquelle on se reportera aux dessins annexés dans lesquels :
- la figure 1 représente un démarreur illustré partiellement en section axiale ;
- la figure 2 représente partiellement en perspective la carcasse du démarreur sur la face intérieure de laquelle sont collés les éléments avant qu'elle ne soit protégée par une couche de protection, conformément à l'invention ;
- la figure 3 est une vue en coupe partielle de l'inducteur du démarreur selon la ligne 3-3 représentée à la figure 2 ;
- la figure 4 est une vue similaire à celle représentée à la figure précédente, les zones libres de la carcasse étant revêtues d'une couche de protection contre la corrosion.

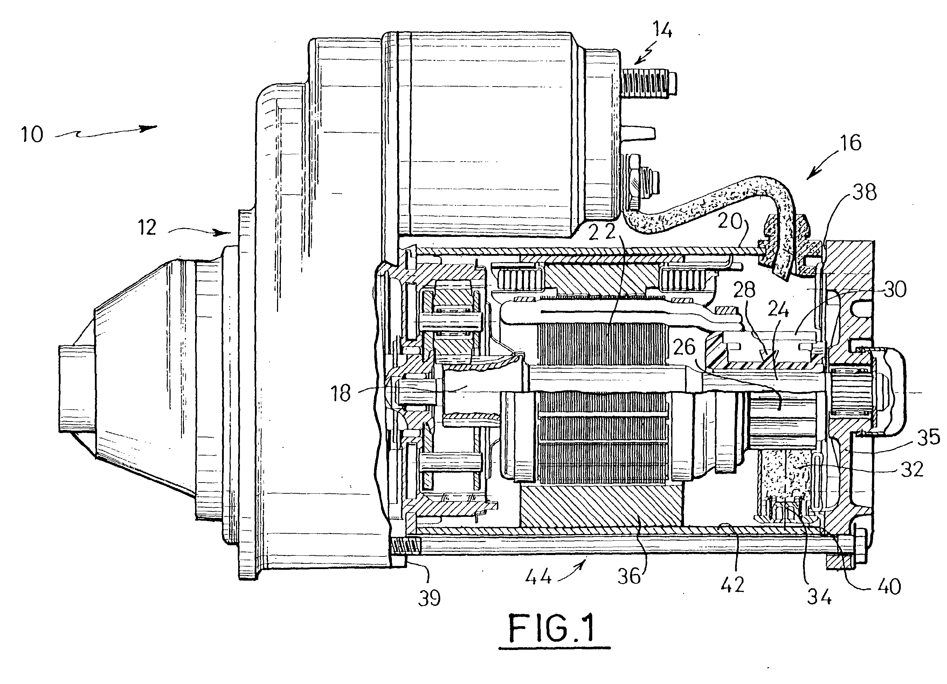

Dans la description, une orientation d'avant en arrière sera utilisée, elle correspond à l'orientation de gauche à droite conformément à la figure 1.

La description qui suit est faite en référence à un démarreur cependant elle n'est pas limitative, elle peut s'appliquer de façon similaire à une autre machine électrique tournante telle qu'un alternateur.

On a représenté sur la figure 1 un démarreur 10 de véhicule automobile dont le carter 12 renferme un contacteur 14 et un moteur électrique 16 qui entraîne un arbre d'induit 18.

Le moteur électrique 16 est logé dans une carcasse 20 sensiblement cylindrique. Son alimentation est pilotée par le contacteur 14 s'étendant parallèlement au moteur 16.

La carcasse, 20 qui est constituée d'un matériau permettant la conduction du flux magnétique, peut par exemple être réalisée par une tôle emboutie, un tube sans soudure ou une tôle roulée et agrafée.

Le moteur 16 est un moteur électrique "série" à inducteurs à courant continu. Il a pour but de transformer l'énergie électrique qui lui est fournie en énergie mécanique pour faire tourner l'arbre d'induit 18.

Le moteur électrique 16 comporte l'arbre d'induit 18 qui porte les enroulements d'induit 22 du moteur 16 et dont un tronçon axial arrière 24, porte un collecteur 26 à pistes annulaires.

Le collecteur 26 est pour l'essentiel constitué par un corps 28 en matière plastique moulée dont la partie externe comporte des éléments métalliques 30, formant pistes conductrices, réalisés sous la forme d'inserts noyés lors du moulage du corps 28.

Le collecteur 26 est monté par emmanchement à force sur le tronçon axial arrière 24 de l'arbre d'induit 18.

Des balais 32 de collecteur sont guidés en translation radiale par un porte-balais 34 solidaire d'un élément de fermeture 35 de la carcasse 20 du démarreur. Les balais 32 sont maintenus en contact avec les pistes conductrices 30 du collecteur 26 par des moyens élastiques tels que des ressorts.

L'élément de fermeture 35, ici métallique, est fixé axialement sur la carcasse métallique 20, de façon à permettre le passage de l'électricité entre la face transversale avant 38 de l'élément de fermeture 35 et la face annulaire transversale d'extrémité arrière 40 de la carcasse 20.

De façon similaire, la face annulaire transversale d'extrémité avant 39 de la carcasse métallique est en contact électrique avec une partie conductrice de l'électricité du carter 12 du démarreur 10, ici en forme de plaque comme décrit dans le document EP-A-0.708.239; des tirants non référencés reliant la plaque à la plaque de fermeture 35.

Ainsi, le courant électrique peut circuler entre les balais 32 des collecteurs négatifs et le pôle négatif de la batterie d'accumulateurs en traversant successivement notamment l'élément de fermeture arrière 35, la carcasse métallique 20 et le carter 12.

Le démarreur 10 comporte des aimants 36 qui sont collés sur la face intérieure concave 42 de la carcasse 20. Ainsi, la carcasse métallique 20 et les aimants 36 constituent l'inducteur 44 du démarreur 10.

La carcasse 20 est protégée contre la corrosion par une couche de protection non représentée à la figure 1.

Conformément à l'invention, le procédé de fabrication de l'inducteur 44 comporte une première étape de collage des aimants 36 sur la face tubulaire intérieure 42 de la carcasse 20, puis une deuxième étape de protection de la carcasse 20, au cours de laquelle sa face tubulaire extérieure 46 est revêtue d'au moins une couche de protection.

La première étape ne pose pas de problème particulier. En effet, il existe de nombreuses colles qui permettent une adhérence suffisante de la colle sur les faces extérieures cylindriques convexes des aimants d'une part, et la face tubulaire intérieure 42 de la carcasse métallique 20, d'autre part, pour assurer un fonctionnement optimal ainsi qu'une durée de vie suffisamment longue du démarreur 10, sachant que ces surfaces en vis à vis sont dépourvues de protection contre la corrosion.

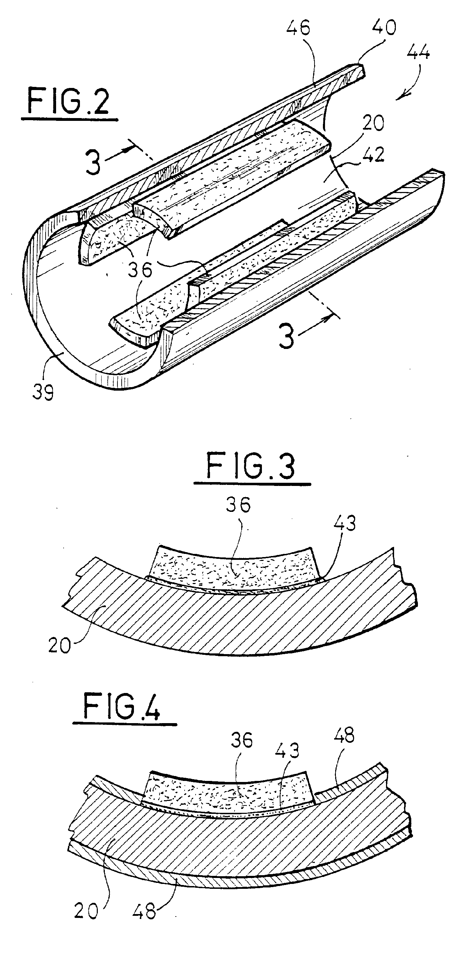

Les figures 2 et 3 représentent l'inducteur 44 après le collage des aimants 36 sur la face tubulaire intérieure 42 de la carcasse 20 au moyen d'une couche de colle 43, conformément à la première étape du procédé selon l'invention.

Le procédé selon l'invention permet de s'affranchir de la contrainte de l'adhérence de la colle sur une couche de protection de la carcasse 20. Le choix de la colle utilisée est facilité puisqu'aucune couche de protection intervient entre les surfaces à coller.

La deuxième étape de protection consiste généralement à tremper l'inducteur 44 dans un liquide présentant de bonnes caractéristiques anticorrosions. Ainsi, après immersion, l'inducteur 44 est revêtu d'une couche de protection 48 contre la corrosion représentée à la figure 4.

Le revêtement anticorrosion se dépose sur toutes les zones de la carcasse 20 qui ne sont pas recouvertes par les éléments 36. Ces zones sont appelées zones libres. Ainsi, la carcasse 20 est parfaitement protégée contre la corrosion et est étanche ce qui est intéressant lorsque la carcasse 20 est roulée et agrafée.

Le procédé selon l'invention permet alors d'utiliser des revêtements de protection contre la corrosion indépendamment de leur adhérence avec la colle. Le choix de la nature de la couche de protection 48 est alors élargi.

Ainsi, contrairement aux procédés connus, il est possible d'utiliser des revêtements bons conducteurs d'électricité comportant par exemple du zinc et/ou du nickel, sans risques de décollement des aimants.

Avantageusement, la couche de protection 48 peut être revêtue d'au moins une autre couche de protection telle qu'une passivation organique qui permet de renforcer la couche de protection 48 et d'augmenter la protection de la carcasse 20 contre la corrosion, ainsi que de rendre celle ci plus étanche.

Les aimants 36 qui sont par exemple réalisés dans un matériau du type céramique à base d'oxydes magnétiques ne sont pas recouverts par la couche de protection 48. Cependant, ils ne nécessitent aucune protection car ils sont insensibles à la corrosion.

Lorsque la couche de protection 48 contre la corrosion provoque une résistance électrique trop importante et gène la circulation du courant au niveau des faces annulaires transversales d'extrémité 40 de la carcasse 20, il est possible, préalablement à la deuxième étape de protection, de réaliser des "épargnes", c'est-à-dire des zones sur lesquels la couche de protection 38 ne se dépose pas.

Certains procédés de ce type sont connus.

L'un d'entre eux consiste notamment à fixer des rondelles en plastique sur les faces annulaires transversales 40 de la carcasse 20 avant la deuxième étape de protection, de façon à les protéger contre le dépôt de la couche de protection. Puis, lorsque la deuxième étape de protection est terminée de les enlever pour que les faces annulaires transversales soient exemptes de la couche de protection.

Une autre solution consiste, lors d'une troisième étape, à enlever, par exemple par abrasion, la couche de protection déposée sur les faces annulaires transversales de la carcasse métallique 20.

Il est possible de déceler la fabrication d'un inducteur d'une machine électrique tournante par le procédé objet de l'invention en constatant l'absence de couche de protection 48 entre la face intérieure 42 la carcasse 20 et la couche de colle qui permet la fixation des aimants 36.

## Revendications

1. Procédé de fabrication d'un inducteur (44) d'une machine électrique tournante qui comporte une carcasse métallique (20) protégée contre la corrosion et au moins un aimant (36) qui est collé sur la face tubulaire intérieure (42) de la carcasse métallique (20) et qui est dépourvu de protection contre la corrosion au niveau de sa face destinée à être collée sur la face tubulaire de la carcasse métallique, **caractérisé en ce qu'**il comporte une première étape de collage dudit au moins un aimant (36) sur ladite face intérieure (42), et une deuxième étape de protection au cours de laquelle les zones libres de la carcasse métallique (44) sont revêtues d'au moins une couche de protection (48) contre la corrosion.

2. Procédé selon la revendication précédente, **caractérisé en ce que** l'une des couches de protection (48) contre la corrosion est une couche de passivation organique.

3. Procédé de fabrication selon la revendication 1, **caractérisé en ce que** l'une des couches de protection (48) contre la corrosion est une couche conductrice de l'électricité.

4. Procédé de fabrication selon la revendication précédente, **caractérisé en ce que** la couche de protection (48) contre la corrosion est un revêtement métallique.

5. Procédé selon la revendication précédente, **caractérisé en ce que** le revêtement métallique comporte du zinc.

6. Procédé selon l'une des revendications 4 ou 5, **caractérisé en ce que** le revêtement métallique comporte du nickel.

7. Procédé selon l'une quelconque des revendications précédentes, **caractérisé en ce que** la deuxième étape est réalisée par immersion de la carcasse métallique (20), sur laquelle est collé ledit au moins un aimant (36), dans un bain d'une substance protectrice contre la corrosion.

8. Procédé selon l'une quelconque des revendications précédentes, **caractérisé en ce qu'**au cours de la deuxième étape les faces annulaires transversales (39, 40) de la carcasse (20) sont protégées contre le revêtement de la couche de protection (48) contre la corrosion.

9. Procédé selon l'une quelconque des revendications 1 à 7, **caractérisé en ce qu'**il comporte une troisième étape au cours de laquelle la couche de protection (48) est enlevée des faces annulaires transversales (39, 40) de la carcasse (20).
